# NEUE EUROPÄISCHE PATENTSCHRIFT

(11) **EP 3 182 568 B2**
(45) Veröffentlichungstag und Bekanntmachung des Hinweises auf die Entscheidung über den Einspruch: **25.11.2020**
(45) Hinweis auf die Patenterteilung: 06.12.2017
(21) Anmeldenummer: 15201100.3
(22) Anmeldetag: 18.12.2015
(51) Int. Cl.: H02K 15/00, H02K 15/04

(54) **WELLENWICKELVORRICHTUNG**
SHAFT WINDING DEVICE
DISPOSITIF DE BOBINAGES ONDULES

(43) Veröffentlichungstag der Anmeldung: 21.06.2017
(73) Patentinhaber: Aumann Espelkamp GmbH, 32339 Espelkamp (DE)
(72) Erfinder: LÜTTGE, Wolfgang, 31787 Hameln (DE)
(74) Vertreter: Bittner, Thomas L.

(56) Entgegenhaltungen:
- DE-A1-102004 035 084
- FR-A1- 3 020 204
- US-A- 4 864 715
- US-A1- 2004 261 885

## Beschreibung

Die Erfindung betrifft eine Wellenwickelvorrichtung zur Herstellung von Wellenwicklungen nach dem Oberbegriff des Anspruchs 1.

Eine gattungsgemäße Vorrichtung ist zum Beispiel aus der DE 10 2004 035 084 A1 bekannt. Wellenwicklungen werden unter anderem zur Herstellung von Statoren für Elektromotoren eingesetzt. Dabei wird der Wickeldraht, dies kann ein Runddraht oder auch ein Flachdraht sein, in der Regel über eine Zuführeinrichtung zugeführt und auf einem Wickelschwert aufgewickelt. Dabei müssen Wellen erzeugt werden. Dies geschieht dadurch, dass bei der Wicklung um das Schwert der Wickelvorgang unterbrochen und der Draht quer zur Zuführrichtung ausgelenkt werden muss, dann eine Drehung des Schwertes um 180° erfolgt, die Drehung wieder angehalten wird usw., damit man das charakteristische Wellenmuster erhält. Je nach gewünschter Verschaltung am Stator werden üblicherweise in solchen Wellenwicklungen eine Mehrzahl Drähte, beispielsweise 6 Drähte gleichzeitig zugeführt und gewickelt.

Bei bisherigen Wickelvorrichtungen wird ein Wickelschwert verwendet, welches der Länge der zu erstellenden Wickelmatte entspricht, wie zum Beispiel in der oben angegebenen Druckschrift beschrieben. Zum Abtransport solcher fertig hergestellten Wickelmatten können zum Beispiel Transportbänder eingesetzt werden, wie sie aus US 2004/0261885 A1 bekannt sind. Anpassungen bzw. das Fahren unterschiedlicher (gerade größerer) Längen von Wickelmatten sind mit den bisher bekannten Vorrichtungen nicht oder nur mit erheblichem Aufwand möglich. Zudem erfordern bekannte Vorrichtungen relativ viel Bauraum, da die Wickelmatten einige Meter lang sein können.

Aufgabe der vorliegenden Erfindung ist es, eine Wellenwickelvorrichtung anzugeben, mit der eine Fertigung von Wellenwickelmatten mit nahezu beliebiger Länge bei vergleichsweise geringem Bauraum möglich ist.

Gelöst wird diese Aufgabe durch eine Wellenwickelvorrichtung mit den Merkmalen des Anspruchs 1, vorteilhafte Ausführungsformen finden sich in den Unteransprüchen.

Die erfindungsgemäße Wellenwickelvorrichtung weist eine Wickeleinheit auf, die ihrerseits eine um eine Wickelachse in einer Wickelrichtung drehbare Wickelschwerteinrichtung aufweist. Auf diese Wickelschwerteinrichtung kann ein Wickeldraht aufgewickelt werden, der von einer Drahtzuführeinrichtung zugeführt wird. Diese ist von der erfindungsgemäßen Vorrichtung ebenfalls umfasst und führt den Wickeldraht in einer Zuführrichtung der Wickeleinheit zur Bewicklung der Wickelschwerteinrichtung zu. Weiter weist die erfindungsgemäße Vorrichtung eine Transporteinrichtung auf. Diese ist dazu ausgelegt, den auf die Wickelschwerteinrichtung zu einer Wellenwicklung aufgewickelten Wickeldraht in einer Transportrichtung parallel zur Wickelachse zu transportieren. Die Transportvorrichtung weist dazu eine Förderanordnung auf, welche die Wellenwicklung durch die Transportvorrichtung in Transportrichtung bewegt. Die Förderanordnung selbst ist dabei um eine koaxial zur Wickelachse verlaufende Drehachse in der Wickelrichtung drehbar in der Transportvorrichtung gelagert, wobei die Förderanordnung als Bandförderer oder Zahnriemenförderer ausgebildet ist.

Durch die sich mit dem Wickelschwert mit drehende Transportvorrichtung kann das Wickelschwert selbst sehr kurz und dadurch auch stabiler ausgebildet werden. Bei der Erzeugung der Wellenwicklungen kann in Transportrichtung die entstehende Wickelmatte in jeder Drehstellung der Wickelschwerteinrichtung weiter transportiert werden, so dass im Prinzip die Fertigung beliebig langer Wickelmatten mit einem nur sehr kurzen Wickelschwert möglich ist. Die erfindungsgemäße Vorrichtung spart daher Bauraum und ist hinsichtlich der Länge der zu fertigenden Wickelmatten sehr flexibel. Auch muss die Matte nicht aufwendig von einem langen Wickelschwert entfernt werden, sondern wird erfindungsgemäß während des Fertigungsprozesses der Wickelmatte bereits vom Schwert abgeschoben.

Bevorzugt weist die erfindungsgemäße Vorrichtung eine Steuereinheit auf, die die Drehung der Wickelschwerteinrichtung und der Förderanordnung so synchronisiert, dass beide sich im Wesentlichen mit derselben Geschwindigkeit in Wickelrichtung um die gemeinsame Drehachse drehen. Auf diese Weise kann der Wickelprozess beliebig lange fortgesetzt werden, ohne dass es zu einer Torsion in der erstellten Wickelmatte kommt. Dabei hilft die Synchronisation der Wickelschwertdrehung einerseits mit der Förderanordnung andererseits.

Nach einer vorteilhaften Ausführungsform der erfindungsgemäßen Vorrichtung ist vorgesehen, dass sie wenigstens ein Haltemittel aufweist, welches dazu ausgelegt ist, einen Abschnitt des Wickeldrahtes festzuhalten, während relativ dazu ein anderer Abschnitt des Wickeldrahtes bewegt wird. Dies kann auf unterschiedliche Weise realisiert sein. So kann etwa das Haltemittel Teil der Wickelschwertanordnung sein oder eine separate Greifvorrichtung oder aber auch als Teil der Transportvorrichtung ausgebildet sein. Wichtig ist, dass das Haltemittel allein oder in Zusammenwirkung mit dem Wickelschwert, wenigstens Abschnitte des Wickeldrahtes festhalten kann, so dass diese Abschnitte entweder durch das Haltemittel selbst oder eine andere Translationsvorrichtung parallel zur Transportrichtung bewegt werden können, so dass die charakteristischen Wellen entstehen können.

Bevorzugt ist als Haltemittel wenigstens ein Greif- oder Klemmelement vorgesehen ist, welches an der Wickeleinheit angeordnet ist. Dabei kann das Greif- oder Klemmelement in oder entgegen Transportrichtung verschieblich an der Wickeleinheit gelagert sein.

Weiter kann vorgesehen sein, dass das Greif- oder Klemmelement eine Klemmbacke aufweist, mit der der Wickeldraht zwischen Klemmbacke und Wickelschwerteinrichtung fixiert werden kann.

Soll gleichzeitig eine Mehrzahl Wickeldrähte, bei denen es sich generell bei allen Ausführungsformen der Erfindung um Flachdrähte handeln kann, aber nicht muss, zu einer Wellenwicklungsmatte verarbeitet werden, kann insbesondere vorgesehen sein, dass das Haltemittel zum gleichzeitigen Festhalten einer Mehrzahl parallel zueinander zugeführter Wickeldrähte ausgelegt ist. Dabei ist von Vorteil, wenn das Haltemittel wenigstens eine Vereinzelungsnut zur Aufnahme nur eines Wickeldrahtes aufweist. Auf diese Weise können die einzelnen Wickeldrähte separat und in einer definierten Lage zueinander auf dem Wickelschwert abgelegt und dort zu einer Wellenwicklung aufgewickelt werden. Bevorzugt sind pro Haltemittel wenigstens so viele Vereinzelungsnuten vorgesehen, wie Wickeldrähte diesem Haltemittel zugeführt werden.

Um die Wickelköpfe der entstehenden Wellenwicklung insbesondere bei Wicklungen aus Flachdrähten möglichst flach zu halten, weist die erfindungsgemäße Vorrichtung nach einer vorteilhaften Ausführungsform eine Presseinheit auf. Diese ist bevorzugt benachbart zur Wickelschwerteinrichtung angeordnet und dazu ausgelegt ist, die Wickelköpfe der Wellenwicklung zu komprimieren.

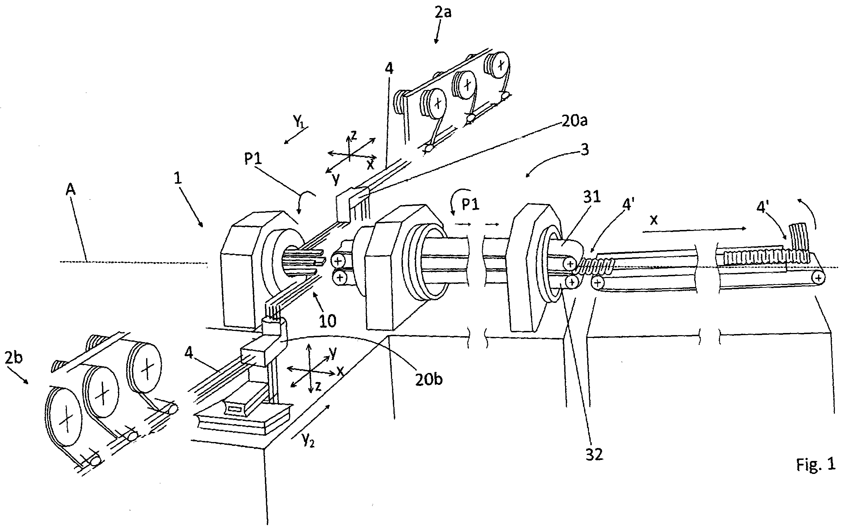

Die Erfindung wird nachfolgend anhand des in der Figur 1 gezeigten Ausführungsbeispiels näher erläutert.

Die dargestellte Wellenwickelvorrichtung weist wenigstens eine Zuführeinrichtung 2a, 2b auf (hier sind zwei Zuführeinrichtungen gezeigt, die Erfindung umfasst ausdrücklich auch Wellenwickelvorrichtungen mit lediglich einer Zuführeinrichtung oder solche mit drei oder mehr Zuführeinrichtungen).

Die Zuführeinrichtungen 2a, 2b führen einen oder eine Mehrzahl Wickeldrähte 4 in jeweils einer entsprechenden Zuführrichtung y1, y2 einer (gemeinsamen) Wickeleinheit 1 zu. Die Wickeleinheit 1 weist eine Wickelschwerteinrichtung 10 auf, welche wenigstens ein quer zur Zuführrichtung y1, y2 (senkrecht zur Y-Achse) aus der Wickeleinheit 1 vorstehendes Wickelschwert aufweist, um welches der zugeführte Draht 4 herum gewickelt wird. Dazu weist die Wickelschwerteinrichtung 10 eine Drehachse A auf, um die herum das Wickelschwert in einer Drehrichtung P1 drehbar gelagert ist. Das Wickeln erfolgt dabei so, dass der wenigstens eine Draht 4 über nicht näher dargestellte Haltemittel, z.B. Greifer oder Klemmbacken, fixiert, insbesondere gegen die Wickelschwerteinrichtung 10 gedrückt wird und die Wickelschwerteinrichtung 10 dabei eine Halb-Drehung um 180° um die Achse A ausführt. Nach jeder Halbdrehung wird der Wickeldraht 4 über die Haltemittel festgehalten und zur Ausbildung der charakteristischen Welle gebogen. Dies kann z.B. dadurch geschehen, dass die den Draht 4 zuführende Drahtdüseneinheit 20a, bzw. 20b in einer Richtung Y quer zur Zuführrichtung translatorisch bewegt wird. Nach weiterer Halbdrehung des Schwertes wiederholt sich der Vorgang, so dass allmählich eine Wickelmatte 4' mit Wellenwicklungen entsteht.

Die entstehende Wickelmatte 4' wird sukzessive von der Wickeleinheit 1 und der Wickelschwerteinrichtung 10 weg in einer Transportrichtung X über eine Transportvorrichtung 3 weiter transportiert, so dass das Wickelschwert in Transportrichtung X kurz und Bauraum sparend ausgebildet werden kann. Die Transportvorrichtung 3 weist eine hier als Bandförderer oder Zahnriemenförderer 31, 32 ausgebildete Förderanordnung auf, welche für den Abtransport der Wickelmatte 4' in Transportrichtung X von der Wickeleinrichtung 1 weg (hier senkrecht zur Vertikalrichtung Z und senkrecht zur Zuführrichtung Y, y1, y2) sorgt.

Die Förderanordnung 31, 32 ist an der Transportvorrichtung 3 wie auch das Wickelschwert 10 in Richtung P1 drehbar um die Maschinenachse A gelagert. Auf diese Weise kann die Transportvorrichtung 3 bereits die auf dem Wickelschwert entstehende Wellenwickelmatte übernehmen, während noch weitere Wellen durch Drehen des Schwertes und Biegen des Drahtes 4 entstehen. Fertige Windungen werden in Richtung X abtransportiert, da die Förderanordnung 31, 32 mitdreht. Auf diese Weise sind Wickelmatten 4' praktisch in beliebiger Länge erstellbar.

Zur zusätzlichen Bearbeitung der Wickelköpfe der Wellenwicklungen, die jeweils durch bei jeder Halbdrehung des Wickelschwertes durch 180°-Umkantung des Wickeldrahtes entstehen, kann zwischen der Förderanordnung 31, 32 und der Wickeleinheit 1 eine Presseinheit vorgesehen sein, die die Wickelköpfe flach presst.

## Patentansprüche

1. Wellenwickelvorrichtung zur Herstellung von Wellenwicklungen mit einer Wickeleinheit (1), welche eine um eine Wickelachse (A) in einer Wickelrichtung (P1) drehbare Wickelschwerteinrichtung (10) aufweist, auf die ein Wickeldraht (4) aufzuwickeln ist, und mit wenigstens einer Drahtzuführeinrichtung (2a, 2b), welche den Wickeldraht (4) in einer Zuführrichtung (Y) der Wickeleinheit (1) zur Bewicklung der Wickelschwerteinrichtung (10) zuführt, wobei
die Wellenwickelvorrichtung weiter eine mit der Wickelschwerteinrichtung (10) mit drehende Transporteinrichtung (3) aufweist, welche dazu ausgelegt ist, den auf die Wickelschwerteinrichtung (10) zu einer Wellenwicklung aufgewickelten Wickeldraht (4) in einer Transportrichtung (X) parallel zur Wickelachse (A) zu transportieren, wobei die Transportvorrichtung (3) eine Förderanordnung (31, 32) aufweist, welche die Wellenwicklung durch die Transportvorrichtung (3) in Transportrichtung (X) bewegt, wobei die Förderanordnung (31, 32) um eine koaxial zur Wickelachse verlaufende Drehachse (A) in der Wickelrichtung (P1) drehbar in der Transportvorrichtung (3) gelagert ist,
**dadurch gekennzeichnet,**
**dass** die Förderanordnung (31, 32) als Bandförderer oder Zahnriemenförderer ausgebildet ist.

2. Wellenwickelvorrichtung nach Anspruch 1,
**dadurch gekennzeichnet,**
**dass** sie eine Steuereinheit aufweist, die die Drehung der Wickelschwerteinrichtung (10) und der Förderanordnung (31, 32) so synchronisiert, dass beide sich im Wesentlichen mit derselben Geschwindigkeit in Wickelrichtung (P1) um die gemeinsame Drehachse (A) drehen.

3. Wellenwickelvorrichtung nach einem der vorigen Ansprüche,
**dadurch gekennzeichnet,**
**dass** sie wenigstens ein Haltemittel aufweist, welches dazu ausgelegt ist, einen Abschnitt des Wickeldrahtes (4) festzuhalten, während relativ dazu ein anderer Abschnitt des Wickeldrahtes bewegt wird.

4. Wellenwickelvorrichtung nach Anspruch 3,
**dadurch gekennzeichnet,**
**dass** als Haltemittel wenigstens ein Greif- oder Klemmelement vorgesehen ist, welches an der Wickeleinheit (1) oder an der Transporteinrichtung (3) angeordnet ist.

5. Wellenwickelvorrichtung nach Anspruch 4,
**dadurch gekennzeichnet,**
**dass** das Greif- oder Klemmelement in Transportrichtung (X) verschieblich an der Wickeleinheit (1) gelagert ist.

6. Wellenwickelvorrichtung nach einem der Ansprüche 4 oder 5,
**dadurch gekennzeichnet,**
**dass** das Greif- oder Klemmelement eine Klemmbacke aufweist, mit der der Wickeldraht (4) zwischen Klemmbacke und Wickelschwerteinrichtung (10) fixiert werden kann.

7. Wellenwickelvorrichtung nach einem der Ansprüche 3 bis 6,
**dadurch gekennzeichnet,**
**dass** das Haltemittel zum gleichzeitigen Festhalten einer Mehrzahl parallel zueinander zugeführter Wickeldrähte (4) ausgelegt ist.

8. Wellenwickelvorrichtung nach einem der Ansprüche 3 bis 7,
**dadurch gekennzeichnet,**
**dass** das Haltemittel wenigstens eine Vereinzelungsnut zur Aufnahme nur eines Wickeldrahtes (4) aufweist.

9. Wellenwickelvorrichtung nach einem der vorigen Ansprüche,
**dadurch gekennzeichnet,**
**dass** sie benachbart zur Wickelschwerteinrichtung (10) eine Presseinheit aufweist, welche dazu ausgelegt ist, die Wickelköpfe der Wellenwicklung zu komprimieren.

## Claims

1. Wave winding device for manufacturing wave windings with a winding unit (1), which has a winding board device (10) which is capable of rotating about a winding axis (A) in a winding direction (P1) and on which a winding wire (4) is to be wound, and with at least one wire feed device (2a, 2b) which feeds the winding wire (4) in a feed direction (Y) of the winding unit (1) for winding on the winding board device (10), wherein
the wave winding device further has a transport device (3) which co-rotates with the winding board device (10) and which is configured to transport the winding wire (4) which has been wound into a wave winding on the winding board device (10), in a transport direction (X) parallel to the winding axis (A), wherein the transport device (3) has a conveyor assembly (31, 32) which moves the wave winding through the transport device (3) in the transport direction (X), wherein the conveyor assembly (31, 32) is mounted in the transport device (3) capable of rotating in the winding direction (P1) about an axis of rotation (A) which runs coaxial with the winding axis, **characterised in that**
the conveyor assembly (31, 32) is designed as a belt conveyor or toothed belt conveyor.

2. Wave winding device according to claim 1,
**characterised in that**
it has a control unit which synchronises the rotation of the winding board device (10) and the conveyor assembly (31, 32) so that the two rotate in the winding direction (P1) about the common axis of rotation (A) at substantially the same speed.

3. Wave winding device according to one of the preceding claims,
**characterised in that**
it has at least one holding means which is designed to hold a portion of the winding wire (4) firm whilst another portion of the winding wire is moved relative thereto.

4. Wave winding device according to claim 3,
**characterised in that**
as the holding means at least one gripping or clamping element is provided which is arranged on the winding unit (1) or on the transport device (3).

5. Wave winding device according to claim 4
**characterised in that**
the gripping or clamping element is mounted on the winding unit (1) where it is displaceable in the transport direction (X).

6. Wave winding device according to one of claims 4 or 5
**characterised in that**
the gripping or clamping element has a clamping jaw with which the winding wire (4) can be fixed between the clamping jaw and the winding board device (10).

7. Wave winding device according to one of claims 3 to 6
**characterised in that**
the holding means is designed for simultaneously securing a plurality of winding wires (4) which are being fed parallel to one another.

8. Wave winding device according to one of claims 3 to 7
**characterised in that**
the holding means has at least one separation groove for receiving only one winding wire (4).

9. Wave winding device according to one of the preceding claims
**characterised in that**
it has adjacent to the winding board device (10) a pressing unit which is designed to compress the winding heads of the wave winding.

## Revendications

1. Dispositif de bobinage ondulé destiné à la fabrication de bobinages ondulés, avec une unité de bobinage (1), qui est dotée d'un agencement de lames de bobinage (10), pouvant tourner autour d'un axe de bobinage (A) dans une direction de bobinage (P1), agencement sur lequel un fil de bobinage (4) doit être enroulé, et avec au moins un dispositif d'alimentation en fil (2a, 2b), qui, dans une direction d'alimentation (Y), conduit le fil de bobinage (4) à l'unité de bobinage (1) pour l'enrouler sur l'agencement de lames de bobinage (10), dans lequel
l'agencement de lames de bobinage (10) présente en plus un dispositif de transport (3) rotatif, qui est aménagé pour transporter le fil de bobinage (4), enroulé en bobinage ondulé sur l'agencement de lames de bobinage (10), dans une direction de transport (X), parallèlement à l'axe de bobinage (A), sachant que le dispositif de transport (3) présente un agencement de transport (31, 32) qui, par le dispositif de transport (3), meut le bobinage ondulé dans la direction de transport (X), sachant que l'agencement de transport (31, 32) est monté dans le dispositif de transport (3), en rotation dans la direction de bobinage (P1), autour d'un axe de rotation (A) qui s'étend coaxialement par rapport à l'axe de bobinage (A),
**caractérisé en ce que**
l'agencement de transport (31, 32) est conçu comme un convoyeur à bande ou un convoyeur à bande dentée.

2. Dispositif selon la revendication 1,
**caractérisé en ce que**
celui-ci présente une unité de commande qui synchronise la rotation de l'agencement de lames de bobinage (10) et de agencement de transport (31, 32) de manière à ce que tous deux tournent essentiellement à la même vitesse, dans la direction de bobinage (P1), autour de l'axe de rotation commun (A).

3. Dispositif selon l'une des revendications précédentes,
**caractérisé en ce que**
celui-ci-ci présente au moins un moyen de retenue qui est aménagé de manière à ce qu'il retienne une section du fil de bobinage (4) pendant qu'une autre section du fil de bobinage est déplacée par rapport à celle-ci.

4. Dispositif selon la revendication 3,
**caractérisé en ce que**,
comme moyen de retenue, est prévu au moins un élément de préhension ou de serrage qui est disposé sur l'unité de bobinage (1) ou sur le dispositif de transport (3).

5. Dispositif selon la revendication 4,
**caractérisé en ce que**
l'élément de préhension ou de serrage est monté, coulissant dans la direction de transport (X), sur l'unité de bobinage (1).

6. Dispositif selon l'une des revendications 4 ou 5,
**caractérisé en ce que**
l'élément de préhension ou de serrage est pourvu d'une mâchoire de serrage, avec laquelle le fil de bobinage (4) peut être fixé entre la mâchoire de serrage et l'agencement de lames de bobinage (10).

7. Dispositif selon l'une des revendications 3 à 6,
**caractérisé en ce que**
le moyen de retenue est aménagé pour la retenue simultanée d'une pluralité de fils de bobinage (4) amenés parallèlement les uns par rapport aux autres.

8. Dispositif selon l'une des revendications 3 à 7,
**caractérisé en ce que**
le moyen de retenue est pourvu d'au moins une rainure de séparation individuelle pour la réception d'un seul fil de bobinage (4).

9. Dispositif selon l'une des revendications précédentes,
**caractérisé en ce que**
celui-ci présente une unité de pression, qui, adjacente à l'agencement de lames de bobinage (10), est aménagée pour comprimer les têtes de bobinages ondulés.
